# EUROPÄISCHE PATENTSCHRIFT

(11) **EP 1 852 519 B1**
(45) Veröffentlichungstag und Bekanntmachung des Hinweises auf die Patenterteilung: **28.08.2013**
(21) Anmeldenummer: 07105570.1
(22) Anmeldetag: 03.04.2007
(51) Int. Cl.: C23C 4/02, C23C 4/12, C23C 28/04, C23C 8/10

(54) **Verfahren zum Herstellen einer Beschichtung**
Method for manufacturing a coating
Procédé de fabrication d'un revêtement

(30) Priorität: 05.05.2006 EP 06405192
(43) Veröffentlichungstag der Anmeldung: 07.11.2007
(73) Patentinhaber: Sulzer Metco AG (Switzerland), 5610 Wohlen (CH)
(72) Erfinder: Refke, Dr., Arno, 5507, Mellingen (CH); Beele, Dr., Wolfram, 40883, Ratingen (DE)
(74) Vertreter: Sulzer Management AG

(56) Entgegenhaltungen:
- EP-A- 1 074 637
- EP-A- 1 479 788
- EP-A1- 1 340 583
- WO-A-02/45931
- WO-A-92/05298
- US-A- 5 302 465
- US-A- 6 042 898
- US-B1- 6 258 467
- US-B1- 6 319 614

## Beschreibung

Die Erfindung betrifft ein Verfahren zum Herstellen einer Beschichtung gemäss Oberbegriff von Anspruch 1 sowie ein mit diesem Verfahren beschichtetes Substrat.

US-A-5 302 465 beschreibt eine Wärmedämmschicht umfassend zwei keramische Schichten aus yttriumstabilisiertem Zirkoniumoxid auf einem Substrat aus einer NiAl-basierten intermetallischen Legierung. Vor dem Aufspritzen der Wärmedämmschicht wird das Substrat mit einer thermischen Vorbehandlung oxidiert, so dass eine schützende α-Al₂O₃-Schicht aufgebaut wird. Die erste keramische Schicht wird mittels einem LPPS-Verfahren und die zweite keramische Schicht mittels einem APS-Verfahren ("Atmospheric Pressure Plasma Spraying") aufgebracht.

WO 92/05298 A beschreibt ein beschichtetes Substrat mit einer äusseren kolumnaren keramischen Wärmedämmschicht, wobei das Substrat zuerst mit einer Haftschicht aus MCrAIY+Hf+Si versehen wird. Die Haftschicht wird in einer Wärmebehandlung in einer Wasserstoffatmosphäre oxidiert, so dass eine Al₂O₃-Zwischenschicht aufgebaut wird. Auf diese Zwischenschicht wird mittels einem CVD-Verfahren die kolumnare keramische Wärmedämmschicht aufgetragen.

Grosse Flächen können mit einem besonderen LPPS- Prozess ("Low Pressure Plasma Spraying- Process"), nämlich einem LPPS-TF-Prozess ("LPPS - Thin Film - Process"), der aus der US-A- 5 853 815 bekannt ist, gleichmässig mit dünnen Schichten versehen werden. Dieser Prozess ist ein thermisches Niederdruck-Spritzverfahren, mit dem Schichtdicken im Mikrometerbereich erzeugt werden können. Die Herstellung einer einheitlichen Beschichtung wird durch eine Spritzpistole erreicht, die geometrisch geeignet ausgestaltet ist, wobei es aber auch wesentlich ist, dass in der Spritzpistole ein ausreichend grosser Überdruck herrscht. Die zu beschichtende Oberfläche wird in eine Prozesskammer gebracht, in der ein Druck kleiner als 10 kPa hergestellt ist, während in der Spritzpistole beispielsweise ein Druck von rund 100 kPa, also ungefähr Umgebungsdruck herrscht. Das grosse Druckgefälle zwischen dem Inneren der Spritzpistole und der Prozesskammer bewirkt, dass der thermische Prozessstrahl zu einem breiten Strahl expandiert, in dem das zu spritzende Material gleichmässig verteilt ist. Es wird eine dünne Lage abgeschieden, die dank homogenem Prozessstrahl dicht ist. Durch einen mehrfachen Auftrag solcher Lagen kann gezielt eine dickere Beschichtung mit besonderen Eigenschaften erzeugt werden.

Eine derartige Beschichtung ist als Funktionsschicht verwendbar. Auf einem metallischen Grundkörper, der das zu beschichtende Substrat bildet, kann eine Funktionsschicht aufgebracht werden, die in der Regel ein mehrlagiges Schichtsystem mit verschieden zusammengesetzten Teilschichten ist. Beispielsweise werden für Gasturbinen (stationäre Gasturbine oder Flugzeugtriebwerk), die bei hohen Prozesstemperaturen betrieben werden, die Schaufeln mit einer ersten ein- oder mehrlagigen Teilschicht beschichtet, so dass das Substrat beständig gegen Heissgaskorrosion wird. Eine zweite Teilschicht - aus keramischem Material- bildet eine Wärmedämmschicht. In der EP-A- 1 260 602 ist ein Verfahren zum Erzeugen eines solchen wärmedämmenden Schichtsystems beschrieben, mit dem eine Mehrzahl von Lagen (Sperrschicht, Schutzschicht, Wärmedämmschicht, Glättungsschicht) durch eine wechselnde Einstellung von steuerbaren Prozessparametern in einem Arbeitszyklus aufgebracht werden.

Bei einem besonderen LPPS-TF-Prozess wird mit dem thermischen Prozessstrahl ein hybrides Beschichten durchgeführt. Dieser Prozess, der aus der EP-A- 1 034 843 oder der EP-A- 1 479 788 bekannt ist, erlaubt, ein thermisches Spritzen mit einer Dampfphasenabscheidung zu kombinieren und so die Möglichkeiten der beiden Verfahren zu vereinigen. Die Eigenschaften des Prozessstrahls sind durch steuerbare Prozessparameter bestimmt, insbesondere durch die Parameter Druck, Enthalpie, Zusammensetzung eines Prozessgasgemisches und Zusammensetzung sowie Applikationsform des zu spritzenden Materials. Das Beschichtungsmaterial wird in Abhängigkeit von den steuerbaren Parametern teilweise verdampft. Die in dampfförmiger und kondensierter, d.h. fester oder flüssiger Form, vorliegenden Phasen des Beschichtungsmaterials werden auf dem Substrat zumindest teilweise abgeschieden. Für das im Prozessstrahl transportierte Material wird der relative Anteil an Dampf und/oder an kondensierter Phase durch ein diagnostisches Messverfahren bestimmt. Mit derart gewonnenen Messdaten werden die steuerbaren Prozessparameter in Bezug auf Sollwerte eingestellt. Bezüglich diesen Sollwerten, welche einem vorgegebenen Dampfanteil oder Anteil an kondensierter Phase entsprechen, wird eine Regelung zur gezielten Herstellung des mehrlagigen Schichtsystems durchgeführt.

Mit dem hybriden Beschichtungsverfahren lässt sich eine Wärmedämmschicht mit einer kolumnaren Mikrostruktur herstellen. Diese Schicht oder Lage setzt sich angenähert aus zylindrischen Körperchen oder Korpuskeln zusammen, deren Zentralachsen senkrecht zur Substratoberfläche ausgerichtet sind. Übergangsbereiche, in denen die Dichte des abgeschiedenen Materials kleiner als in den Korpuskeln ist, begrenzen die Korpuskeln seitlich. Diese kolumnare Lage mit anisotroper Mikrostruktur ist dehnungstolerant gegenüber wechselnden Spannungen, die sich aufgrund von wiederholt auftretenden Temperaturänderungen ergeben. Die Beschichtung reagiert auf die wechselnden Spannungen auf eine weitgehend reversible Weise, d.h. ohne eine Ausbildung von Rissen, so dass ihre Lebensdauer beträchtlich verlängert ist im Vergleich mit der Lebensdauer einer Beschichtung, die keine kolumnare Mikrostruktur hat.

Aufgabe der Erfindung ist es, ein Verfahren zum Herstellen einer Beschichtung auf einem Substrat zu schaffen, wobei die Beschichtung aus einer keramischen, mehrlagigen Funktionsschicht bestehen soll und wobei sich ein gegenüber bekannten Funktionsschichten verbesserter Übergang zwischen Substrat und Beschichtung ergeben soll. Dabei soll keramisches Beschichtungsmaterial mit einem LPPS-TF-Prozess als eine Funktionsschicht, die insbesondere eine kolumnare Teilschicht umfasst, auf das Substrat aufgebracht werden. Diese Aufgabe wird durch das im Anspruch 1 definierte Verfahren gelöst.

Mit dem Verfahren wird eine Beschichtung auf einem Substrat hergestellt, das eine Oberfläche eines Grundkörpers bildet. Das Substrat ist insbesondere eine Haftschicht. Bei diesem Verfahren werden in einer Prozesskammer unter Verwendung eines Plasmastrahls und Anwendung eines LPPS-TF-Prozesses eine Lage mit keramischem Beschichtungsmaterial auf das Substrat aufgebracht. Das Substrat enthält mindestens ein Metall Me. Bei einer eingestellten Reaktionstemperatur des Substrats und bei Anwesenheit von Sauerstoff wird reaktiv ein Oxid, das sich mit an die Oberfläche diffundiertem Metall Me ergibt, als keramische Zwischenschicht erzeugt. Auf dieser Zwischenschicht wird die keramische Lage abgeschieden.

Die abhängigen Ansprüche 2 bis 12 betreffen vorteilhafte Ausführungsformen des erfindungsgemässen Verfahrens.

Nachfolgend wird die Erfindung anhand der Zeichnungen erläutert. Es zeigen:
- Fig. 1: einen Ausschnitt aus einer Beschichtung, die mit dem erfindungsgemässen Verfahren hergestellt ist,
- Fig. 2: eine schematische Darstellung zur Herstellung einer dünnen keramischen Zwischenschicht,
- Fig. 3: die Seitenansicht eines Prozessstrahls, der nach einem fotografischen Bild gezeichnet ist, wobei einzelne Bereiche mit gestrichelten Konturen dargestellt sind, und
- Fig. 4: ein schematisches Schrägbild zum Prozessstrahl der Fig. 3.

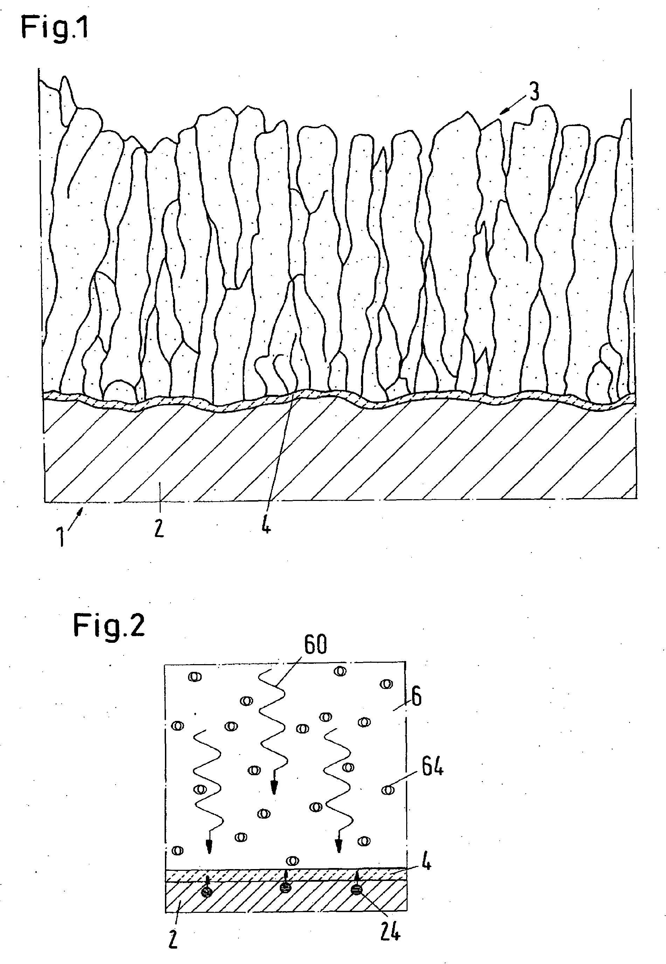

Eine Funktionalschicht, nämlich eine Beschichtung 1, wie sie in Fig. 1 ausschnittsweise abgebildet ist, umfasst auf einem Substrat 2 eine Lage 3 aus keramischem Beschichtungsmaterial und eine keramische Zwischenschicht 4, die erfindungsgemäss mit dem in Fig. 2 schematisch illustrierten Verfahren hergestellt ist. Das Substrat 2 befindet sich an der Oberfläche eines nicht dargestellten Grundkörpers.

Das erfindungsgemässe Beschichtungsverfahren wurde für eine Funktionalschicht entwickelt, die eine kolumnare Lage umfasste, wobei diese kolumnare Lage auf ein spezielles Substrat 2 aufzubringen war, das ein bei geeigneten Reaktionsbedingungen oxidierbares Metall Me enthält. Die geeigneten Reaktionsbedingungen umfassen eine Reaktionstemperatur, bei der Metall Me zur Oberfläche des Substrats 2 diffundiert, wo es oxidiert werden kann. Im Nachhinein stellte man fest, dass dieses Verfahren allgemeiner anwendbar ist, nämlich auch auf keramische Funktionalschichten, deren Lage keine kolumnare Struktur aufweist.

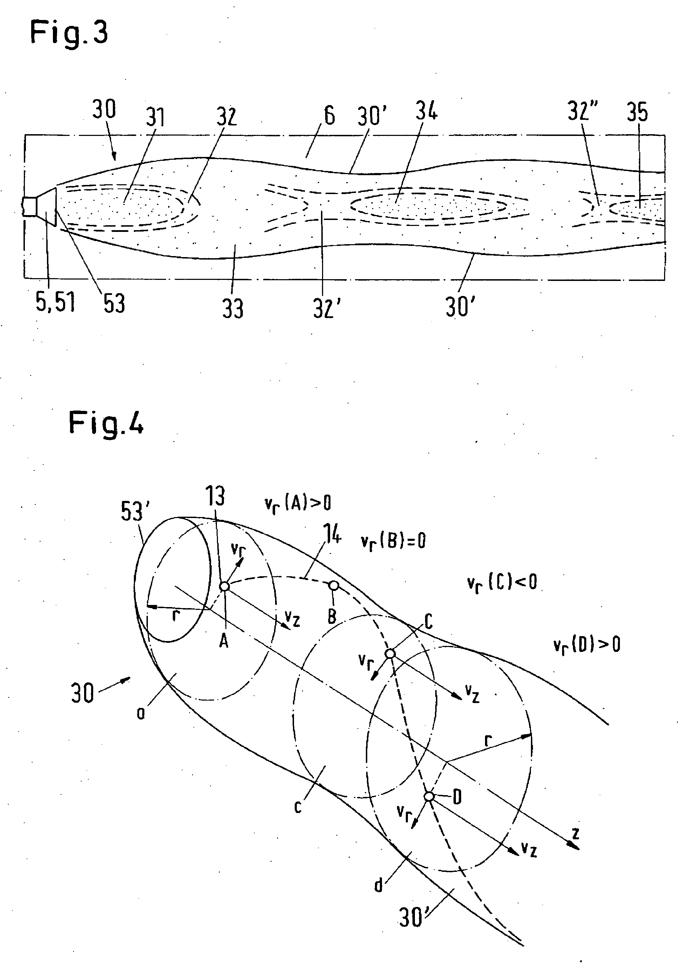

Das Substrat 2 ist die Oberfläche des Grundkörpers; oder es ist eine Haftschicht, die auf dem Grundkörper aufgebracht ist. Auf das Substrat 2 wird bei dem in Fig. 1 dargestellten Beispiel eine keramische Lage 3 aufgebracht, die kolumnar ist, die aber auch nichtkolumnar sein könnte. Beim Herstellen der Beschichtung 1 wird ein LPPS-TF-Prozess angewendet, wobei in einer Prozesskammer 6 (siehe auch Fig. 3) und unter Verwendung eines Plasmastrahls 30 eine Vielzahl von gleichmässigen und dünnen Lagen auf den Grundkörper aufgebracht werden. Die kolumnare Lage wird mit dem hybriden Verfahren aufgebracht, bei dem dampfförmige und kondensierte Phasen eines keramischen Beschichtungsmaterials aufgespritzt werden. Vor dem Aufbringen der kolumnaren Lage , die aus keramischem Material besteht, wird die keramische Zwischenschicht 4 als eine TGO-Schicht ("Thermal Grown Oxide") auf dem Substrat 2 hergestellt: siehe Fig. 2.

Das Substrat 2 enthält mindestens das Metall Me, dem in Fig. 2 das Bezugszeichen 24 zugeordnet ist. Bei der Ausbildung der TGO-Schicht reagiert Sauerstoff O₂ - symbolisiert durch Teilchen 64 - mit dem Metall Me oder auch mehreren Metallen. Der Sauerstoff 64 ist mit einem vorgegebenen Partialdruck in der Prozesskammer 6 anwesend. Dieser liegt je nach Arbeitsdruck in der Prozesskammer 6 im Bereich von 0.01 mbar - 20 mbar, wobei die Einhaltung eines definierten Wertes z.B. durch Massenflussregler kontrolliert wird. Der O₂-Partialdruck beeinflusst dabei die Wachstumsgeschwindigkeit und Struktur bei der Ausbildung der TGO-Schicht. Damit diese Oxidation entsteht, muss das Substrat 2 durch einen Energieeintrag auf die oben genannte Reaktionstemperatur gebracht werden, beispielsweise durch Bestrahlen mit Infrarot, das durch Wellen 60 symbolisiert ist. Metall 24 diffundiert bei der Reaktionstemperatur des Substrats 2 zu dessen Oberfläche sowie der Oberfläche der sich bildenden Zwischenschicht 4. Diese Schicht 4 stellt ein geeignetes Fundament für die anschliessend abzuscheidende Lage 3 dar, da sie einen Übergang von einem metallischen zu einem keramischen Werkstoff herstellt. Die keramische Zwischenschicht 4 weist eine Dicke auf, deren Wert im Bereich von 0.001 - 2 µm, insbesondere 0.1 - 0.6 µm liegt.

Die für die Oxidation erforderliche Reaktionstemperatur des Substrats 2 hängt von dessen Zusammensetzung ab. Sie kann mittels eines Energieeintrags durch den Plasmastrahl oder durch eine zusätzliche Quelle erzeugt werden. Die zusätzliche Quelle kann innerhalb der Prozesskammer 6 oder ausserhalb von dieser in einer Transferkammer angeordnet sein. Diese Quelle ist insbesondere ein Infrarotstrahler, ein Laser oder ein Elektronenstrahlerzeuger.

Mit Vorteil ist das Metall Me Aluminium Al, wobei aber auch weitere Metalle bei der Bildung der keramischen Zwischenschicht 4 beteiligt sein können. Die Reaktionstemperatur des Substrats 2 hat insbesondere einen Wert im Bereich von 900 - 1150°C. Dieser Bereich kann auch grösser sein und beispielsweise zwischen 800 und1200°C liegen.

Das Substrat 2 besteht aus einer metallischen Legierung, insbesondere einem Werkstoff aus der Gruppe der MCrAlY-Legierungen, mit M = Ni, Co, CoNi oder Fe. Sie kann auch aus einem Aluminid bestehen, beispielsweise PtAl oder PtNiAl, oder aus einer intermetallischen Phase, beispielsweise einer NiAl-Verbindung.

Die Reaktionstemperatur des Substrats 2 wird unter Verwendung von mindestens einem Sensor gemessen und eingestellt. Dabei kann der Sensor ein Infrarot-Pyrometer, eine Thermokamera oder ein Thermofühler sein.

Ist das Substrat 2 eine Haftschicht, so kann der zu beschichtende Grundkörper nach einem Herstellen der Haftschicht in die Prozesskammer 6 eingebracht werden. Der Grundkörper wird aber mit Vorteil erst in der Prozesskammer 6 mit der Haftschicht mittels dem LPPS- Prozess, dem LPPS-TF-Prozess oder einem PVD-Verfahren beschichtet. Zu Beginn des Beschichtungsverfahrens kann die Oberfläche des Grundkörpers mit dem Plasmastrahl oder einem anderen energieeintragenden Mittel gereinigt werden, z.B. durch einen übertragenen Lichtbogen aus der Plasmastrahlquelle ("Transferred Arc Cleaning").

Fig. 3 zeigt die Seitenansicht eines Prozessstrahls 30, der nach einem fotografischen Bild gezeichnet ist; er strömt aus einer Düse 51 einer Spritzpistole 5 aus. Dampf des Beschichtungsmaterials und Partikel, die Licht streuen und/oder emittieren, machen den Prozessstrahl 30 sichtbar. Insbesondere erkennt man - wenn auch viel schwächer als dargestellt - eine äussere Oberfläche 30', die eine Grenze gegen den restlichen Raum der Prozesskammer 6 bildet. Innerhalb des Strahls 30 sind periodisch auftretende Kernbereiche 31, 34 und 35 erkennbar, in denen die Dichte des zu spritzenden Materials grösser ist als in einem zusammenhängenden Bereich 33, der an die Oberfläche 30' grenzt. Zwischen den Kernbereichen 31, 34 und 35 und dem Bereich 33 gibt es Übergangsbereiche 32, 32', 32" mit mittleren Dichten. Der Prozessstrahl 30 breitet sich mit Überschallgeschwindigkeit aus, wobei sich Schockwellen ausbilden. Am Austritt 53 der Düse 51 ist der Druck grösser als in der Atmosphäre der Prozesskammer 6 ausserhalb des Prozessstrahls 30. Durch eine Wechselwirkung zwischen der umgebenden Atmosphäre und dem Prozessstrahl 30 ergibt sich eine wellenförmige Oberfläche 30'. Diese Wechselwirkung hat auch zur Folge, dass beim hybriden Beschichtungsverfahren der dampfförmige Anteil des zu spritzenden Materials innerhalb der Oberfläche 30' gefangen bleibt. Dies wird anhand der Fig. 4 näher erläutert:

Ein Ring 53' markiert den Anfang des Prozessstrahls 30 beim Düsenaustritt 53. Es sind drei Querschnitte a, c und d des Prozessstrahls 30, der in Richtung der z-Achse strömt, mit strichpunktierten Ringen angegeben. Der kreisförmige Querschnitt des Prozessstrahls 30 weist einen variablen Radius r auf. Ein Dampfteilchen (Atom oder Molekül) befindet sich zu einem ersten Zeitpunkt an einer durch einen kleinen Kreis 13 markierten Position A im Querschnitt a und bewegt sich weiter auf einer Kurve 14 durch eine Position B bei der Strahloberfläche 30', durch eine Position C auf dem Querschnitt c und durch eine Position D auf dem Querschnitt d. Dieses Dampfteilchen hat eine longitudinale Geschwindigkeitskomponente V_{z} in Strömungsrichtung (Überschall) und eine transversale oder radiale Komponente Vᵣ, die kleiner als V_{z} ist. An der Position A ist Vᵣ = Vᵣ(A) > 0. Durch die Wechselwirkung mit dem Gas aus der Umgebung 6 reduziert sich Vᵣ, bis diese Geschwindigkeitskomponente in der Position B die Richtung umkehrt. An der Position C ist Vᵣ < 0, und das Dampfteilchen nähert sich der z-Achse. Nach einem Durchgang durch die Mitte des Prozessstrahls 30 gilt an der Position D wieder Vᵣ > 0. Durch die Wechselwirkung mit der Umgebung 6 macht das Dampfpartikel also eine Wellenbewegung innerhalb der Grenzfläche 30' des Prozessstrahls 30. Dies gilt weitgehend für alle Dampfpartikel: Das verdampfte Beschichtungsmaterial bleibt im Prozessstrahl 30 zurück gehalten, wobei die Oberfläche 30' als eine Barriere erscheint. Die dampfförmige Phase kann, da sie den Prozessstrahl 30 nicht verlässt, ihren Beitrag zum Aufbau der kolumnaren Lage leisten.

Die Ausbildung der kolumnaren Lage erfolgt mit Vorteil ebenfalls unter Einstellung eines definierten O₂-Partialdruckes, um eine ausreichende Sättigung der Schicht mit O₂ zu gewährleisten, da dies sowohl die stöchiometrische Zusammensetzung als auch das Wachstum und die Struktur der kolumnaren Lage beeinflußt. Der Arbeitsdruck in der Prozesskammer 6 liegt dabei im Bereich von 0.01 - 20 mbar, vorzugsweise 0.05 - 5 mbar, und der O₂-Partialdruck in Bereich von 0.01 - 2 mbar, vorzugsweise 0.05 - 1 mbar.

Nachfolgend wird ein typisches Ausführungsbeispiel beschrieben:

Auf ein Bauteil (Grundkörper) wird eine metallische Haftschicht aus PtAl (mit EB-PVD-Verfahren) oder MCrAlY (mit LPPS-Verfahren) aufgebracht, wobei die Rauheit dieser Beschichtung einen Wert kleiner als 1 bis 2 µm aufweisen soll.

In der Prozesskammer 6 wird das Bauteil mittels dem Plasmastrahl des LPPS-Verfahrens (Prozessgas Ar mit Beimischung von H₂ oder He) bei einem Druck der umgebenden Atmosphäre von rund 100 mbar bis auf die Starttemparatur (im Bereich 900 -1150°C) aufgeheizt.

Eine TGO-Schicht von rund 0.1 - 0.5 µm Dicke bildet sich unter Zugabe von O₂ zum Umgebungsgas mit einem Partialdruck im Bereich von 0.05 - 5 mbar während rund 10-15 Minuten aus. Dabei wird das Bauteil mittels dem Prozessplasmastrahl auf der Bearbeitungstemperatur gehalten. Die Temperatur und der O₂-Partialdruck werden dabei kontrolliert auf konstant bleibenden Werten gehalten.

Eine kolumnare Schicht (TBC, "Thermal Barrier Coating") - Lage 3 - mit einer Dicke von rund 100 bis 200 µm wird auf das Bauteil durch den LPPS-TF Prozess bei rund 0.5 - 5 bar (gemäss EP-A- 1 034 843) aufgebracht, wobei der O₂-Partialdruck von rund 0.05 - 0.5 bar während des gesamten Beschichtungsprozesses beigehalten und überwacht wird.

Das beschichtete Bauteil wird schliesslich in einer separaten Schleusenkammer und geschützt durch eine Ar-Atmosphäre abgekühlt.

Mit dem erfindungsgemässen Verfahren lässt sich ein Körper beschichten, der aus einem metallischen Werkstoff hergestellt ist. Die Beschichtung 1 eines solchen Körpers weist eine Dicke der keramischen Zwischenschicht 4 auf, die zwischen 0.001 - 2 µm liegt. Vorteilhafterweiser liegt diese Dicke zwischen 0.1 - 0.6 µm. Die keramische Zwischenschicht 4 kann über eine Höhe grösser als 0.05 µm homogen ausgebildet sein.

Die auf die keramische Zwischenschicht 4 aufgebrachte keramische Lage 3 ist beispielsweise gemäss einer der folgenden Alternativen ausgebildet:
a) Die Lage 3 hat eine nichtkolumnare, mittels des LPPS-TF-Prozesses thermisch aufgespritzte Struktur.
b) In der Lage 3 geht eine dünne kolumnare Teilschicht in eine nichtkolumnare Teilschicht über.
c) Die Lage 3 besteht aus einer Mehrlagenschicht, die eine Kombination aus kolumnaren und nichtkolumnaren Teilschichten umfasst und die abwechselnd insbesondere eine dünne kolumnare Teilschicht, eine nichtkolumnare Teilschicht und mindestens eine weitere Lage mit kolumnarer Struktur umfasst.

Bei einer weiteren Ausführungsform umfasst die keramische Lage 3 eine Kombination von zwei Metalloxiden, die zwei kolumnare Teilschichten bilden. Das erste Metalloxid ist insbesondere ein teilstabilisiertes Zirkoniumoxid und das zweite Metalloxid beispielsweise ein Dysprosium-vollstabilisiertes Zirkoniumoxid. Das zweite Metalloxid kann auch ein Lanthanzirkonat sein oder ein A₂E₂O₇-Pyrochlor, wobei vorzugsweise A ein Element der Lanthanreihe, insbesondere Gadolinium, und E Zirkonium ist. Die Metalloxide können eine Perowskitphase oder eine Spinellphase aufweisen. Die keramische Lage 3 kann auch aus einem mehrfachen Auftragen der Kombination der beiden Metalloxide gebildet sein.

## Patentansprüche

1. Verfahren zum Herstellen einer Beschichtung (1) auf einem Substrat (2), wobei die Beschichtung (1) aus einer keramischen mehrlagigen Funktionsschicht (3) besteht, die keramische Funktionsschicht (3) eine kolumnare Schicht umfasst, und das Substrat (2) mindestens ein Metall (Me) enthält, bei welchem Verfahren die keramische Funktionsschicht (3) in einer Prozesskammer (6) unter Verwendung eines Plasmastrahls (30) und Anwendung eines LPPS-Dünnfilmprozesses aufgebracht wird, **dadurch gekennzeichnet, dass** das Substrat (2) aus einer eine auf einem Grundkörper mittels eines LPPS-Prozesses, eines LPPS-Dünnfilm-Prozesses oder eines PVD-Verfahrens hergestellten Haftschicht aus einem Werkstoff aus der Gruppe der MCrAIY-Legierungen, mit M = Ni, Co, CoNi oder Fe, oder aus einem Aluminid, insbesondere PtAl oder PtNiAl, oder aus einer intermetallischen Phase, insbesondere einer NiAl-Verbindung besteht und die Beschichtung (1) eine zwischen dem Substrat (2) und der keramischen Funktionsschicht (3) befindliche keramische Zwischenschicht (4) aufweist und zur Ausbildung der keramischen Zwischenschicht (4) in der Prozesskammer (6) ein Sauerstoffpartialdruck im Bereich von 0.01 mbar bis 20 mbar eingestellt wird und dass bei einer eingestellten Reaktionstemperatur des Substrats im Bereich von 800 bis 1200 °C und bei Anwesenheit von Sauerstoff reaktiv ein Oxid, das sich mit an die Oberfläche des Substrats (2) und der sich bildenden Zwischenschicht (4) diffundiertem Metall (Me) ergibt, als keramische Zwischenschicht (4) mit einer Dicke im Bereich von 0.001 bis 2 µm erzeugt wird und dass auf diese Zwischenschicht (4) die keramische Funktionsschicht (3) abgeschieden wird, wobei die keramische Funktionsschicht (3) mit einem hybriden Verfahren aufgebracht wird, bei welchem dampfförmige und kondensierte Phasen eines keramischen Beschichtungsmaterials aufgespritzt werden.

2. Verfahren nach Anspruch 1, **dadurch gekennzeichnet, dass** das Substrat (2) die Oberfläche eines Grundkörpers oder eine auf einem Grundkörper aufgebrachte Haftschicht ist und dass die Reaktionstemperatur des Substrats (2), die von dessen Zusammensetzung abhängt, mittels eines Energieeintrags (60) durch den Plasmastrahl (30) oder durch eine zusätzliche Quelle erzeugt wird.

3. Verfahren nach Anspruch 2, **dadurch gekennzeichnet, dass** die zusätzliche Quelle innerhalb der Prozesskammer (6) oder ausserhalb von dieser in einer Transferkammer angeordnet ist und dass diese Quelle ein Infrarotstrahler, ein Laser oder ein Elektronenstrahlerzeuger ist.

4. Verfahren nach einem der Ansprüche 1 bis 3, **dadurch gekennzeichnet, dass** die Reaktionstemperatur des Substrats (2) einen Wert im Bereich von 900 - 1150 °C hat.

5. Verfahren nach einem der Ansprüche 1 bis 4, **dadurch gekennzeichnet, dass** das Metall (Me) zumindest teilweise Aluminium (Al) ist und das Substrat aus einer aluminiumhaltigen Verbindung besteht.

6. Verfahren nach Anspruch 5, **dadurch gekennzeichnet, dass** die keramische Zwischenschicht (4) zu mehr als 90% aus α-Al₂O₃ besteht.

7. Verfahren nach einem der Ansprüche 1 bis 6, **dadurch gekennzeichnet, dass** die keramische Funktionsschicht (3) eine kolumnare Teilschicht ist oder umfasst, die mit dem LPPS-TF-Prozess durch Aufbringen einer Vielzahl von gleichmässigen und dünnen Lagen auf die Zwischenschicht (4) aufgespritzt wird, wobei ein hybrides Verfahren angewendet wird, bei dem dampfförmige und kondensierte Phasen des keramischen Beschichtungsmaterials aufgebracht werden.

8. Verfahren nach einem der Ansprüche 1 bis 7, **dadurch gekennzeichnet, dass** die Reaktionstemperatur des Substrats (2) unter Verwendung von mindestens einem Sensor gemessen und eingestellt wird, wobei der Sensor ein Infrarot-Pyrometer, eine Thermokamera oder ein Thermofühler ist.

9. Verfahren nach einem der Ansprüche 1 bis 8, **dadurch gekennzeichnet, dass** die keramische Zwischenschicht (4) mit einer Dicke von 0.1 bis 0.6 µm erzeugt wird.

10. Verfahren nach einem der Ansprüche 1 bis 9, **dadurch gekennzeichnet, dass** zur Ausbildung der keramischen Zwischenschicht (4) für den erforderlichen Sauerstoffpartialdruck in der Prozesskammer (6) ein Wert im Bereich von 0.05 - 5 mbar eingestellt und während des gesamten Prozesses kontrolliert wird.

11. Verfahren nach einem der Ansprüche 1 bis 10, **dadurch gekennzeichnet, dass** zur definierten Ausbildung der Schichtstruktur beim Aufbringen der kolumnaren Schicht ein geeigneter Sauerstoffpartialdruck in der Prozesskammer im Bereich von 0.01 mbar - 2 mbar, vorzugsweise im Bereich von 0.05 mbar - 1 mbar eingestellt und während des gesamten Prozesses kontrolliert wird.

12. Verfahren nach Anspruch 11, **dadurch gekennzeichnet, dass** der Arbeitsdruck in der Prozesskammer (6) im Bereich von 0.01 mbar bis 20 mbar, vorzugsweise 0.05 mbar bis 5 mbar liegt.

## Claims

1. A method for the manufacture of a coating (1) on a substrate (2), wherein the coating (1) is composed of a ceramic, multilayer functional layer (3), the ceramic functional layer (3) includes a columnar layer and the substrate (2) contains at least one metal (Me), in which method the ceramic functional layer (3) is applied in a process chamber (6) using a plasma beam (30) and using an LPPS thin film process,
**characterised in that** the substrate (2) is composed of a bond layer manufactured on a base body by means of an LPPS process, an LPPS thin film process or a PVD process and composed of a material from the group of MCrAlY alloys, where M = Ni, Co, CoNi or Fe, or of an aluminide, in particular PtAl or PtNiAl, or of an intermetallic phase, in particular of an NiAl compound, and the coating (1) has a ceramic intermediate layer (4) located between the substrate (2) and the ceramic functional layer (3) and, for the formation of the ceramic intermediate layer (4), an oxygen partial pressure in the range of 0.01 mbar to 20 mbar is set in the process chamber (6) and **in that**, with a set reaction temperature of the substrate in the range from 800 to 1200°C and with a presence of oxygen, an oxide is reactively produced as a ceramic intermediate layer (4) having a thickness in the region of 0.001 to 2 µm, said oxide resulting with a metal (Me) diffused onto the surface of the substrate (2) and the forming intermediate layer (4), and **in that** the ceramic functional layer (3) is deposited on this intermediate layer (4), wherein the ceramic functional layer (3) is applied using a hybrid process in which vaporous and condensed phases of a ceramic coating material are sprayed on.

2. A method in accordance with claim 1, **characterised in that** the substrate (2) is the surface of a base body or is a bond layer applied to a base body and **in that** the reaction temperature of the substrate (2), which depends on its composition, is produced by means of an energy input (60) by the plasma beam (30) or by an additional source.

3. A method in accordance with claim 2, **characterised in that** the additional source is arranged inside the process chamber (6) or outside thereof in a transfer chamber and **in that** this source is an infra-red heater, a laser or an electron beam generator.

4. A method in accordance with any one of the claims 1 to 3, **characterised in that** the reaction temperature of the substrate (2) has a value in the range from 900°C - 1150°C.

5. A method in accordance with any one of the claims 1 to 4, **characterised in that** the metal (Me) is at least partly aluminium (Al) and the substrate is composed of a compound containing aluminium.

6. A method in accordance with claim 5, **characterised in that** the ceramic intermediate layer (4) is composed of more than 90% α-Al₂O₃.

7. A method in accordance with any one of the claims 1 to 6, **characterised in that** the ceramic functional layer (3) is or includes a columnar part layer, which is sprayed on using the LPPS-TF process by applying a plurality of uniform and thin layers onto the intermediate layer (4), wherein a hybrid method is used in which vaporous and condensed phases of the ceramic coating material are applied.

8. A method in accordance with any one of the claims 1 to 7, **characterised in that** the reaction temperature of the substrate (2) is measured and adjusted using at least one sensor, wherein the sensor is an infrared pyrometer, a thermal camera or a thermal sensor.

9. A method in accordance with any one of the claims 1 to 8, **characterised in that** the ceramic intermediate layer (4) is produced with a thickness of 0.1 to 0.6 µm.

10. A method in accordance with any one of the claims 1 to 9, **characterised in that**, for the formation of the ceramic intermediate layer (4), a value in the range of 0.05 - 5 mbar is set for the required oxygen partial pressure in the process chamber (6) and is monitored during the entire process.

11. A method in accordance with any one of the claims 1 to 10, **characterised in that**, for the defined formation of the layer structure, a suitable oxygen partial pressure in the range of 0.01 mbar - 2 mbar, preferably in the range of 0.05 - 1 mbar, is set in the process chamber on application of the columnar part layer and is monitored during the entire process.

12. A method in accordance with claim 11, **characterised in that** the working pressure in the process chamber (6) lies in the range from 0.01 mbar to 20 mbar, preferably 0.05 mbar to 5 mbar.

## Revendications

1. Procédé de réalisation d'un revêtement (1) sur un substrat (2), le revêtement (1) consistant en une couche fonctionnelle (3) céramique en une pluralité de strates, le substrat (2) comprenant au moins un métal (Me), dans lequel procédé la couche fonctionnelle (3) céramique étant appliquée dans une chambre de processus (6) en utilisant un faisceau plasma (30) et en appliquant un processus LPPS à couche mince, **caractérisé en ce que** le substrat (2) consiste en une couche d'adhérence appliquée sur un corps de base selon un processus LPPS, un processus LPPS à couche mince ou un processus PVD et réalisée en un matériau choisi dans le groupe des alliages MCrAlY avec M = Ni, Co, CoNi ou Fe ou en un aluminure, notamment PtAl ou PtNiAl ou en une phase intermétallique, notamment un composé NiAl, et que le revêtement (1) comprend une couche intermédiaire céramique (4) disposée entre le substrat (2) et la couche fonctionnelle (3) céramique, et **en ce que**, dans la chambre de processus, pour former la couche intermédiaire céramique (4), une pression partielle d'oxygène est réglée entre 0,01 mbar et 20 mbar et **en ce que**, en présence d'une température de réaction du substrat entre 800 et 1200 °C et en présence d'oxygène réactif, un oxyde est formé comme couche intermédiaire céramique (4) avec une épaisseur entre 0,001 et 2 µm qui se forme avec du métal diffusé à la surface du substrat (2) et de la couche intermédiaire céramique (4) et **en ce que** la couche fonctionnelle céramique (3) est déposée sur cette couche intermédiaire (4), la couche fonctionnelle céramique (3) étant déposée selon un processus hybride où des phases de vapeur et des phases condensées d'un matériau de revêtement céramique sont appliquées par projection.

2. Procédé selon la revendication 1, **caractérisé en ce que** le substrat (2) est la surface d'un corps de base ou une couche d'adhérence appliquée sur un corps de base et **en ce que** la température de réaction du substrat (2), qui dépend de sa composition, est engendrée moyennant apport d'énergie (60) par le faisceau plasma (30) ou par une source supplémentaire.

3. Procédé selon la revendication 2, **caractérisé en ce que** la source supplémentaire est disposée à l'intérieur de la chambre de processus (6) ou à l'extérieur de celle-ci dans une chambre de transfert et **en ce que** cette source est un radiateur à infrarouge, un laser ou une source de faisceau électronique.

4. Procédé selon l'une des revendications 1 à 3, **caractérisé en ce que** la température de réaction du substrat (2) à une valeur dans la gamme de 900 à 1150 °C.

5. Procédé selon l'une des revendications 1 à 4, **caractérisé en ce que** le métal (Me) est au moins partiellement de l'aluminium (Al) et **en ce que** le substrat est fait en un composé contenant de l'aluminium.

6. Procédé selon la revendication 5, **caractérisé en ce que** la couche intermédiaire céramique (4) est fait à plus de 90 % en α-Al₂O₃.

7. Procédé selon l'une des revendications 1 à 6, **caractérisé en ce que** la couche fonctionnelle céramique (3) est ou comporte une couche partielle colonnaire obtenue selon un processus LPPS à couche fine par projection d'une pluralité de couches homogènes et minces sur la couche intermédiaire (4), où des phases de vapeur et des phases condensées du matériau de revêtement sont appliquées.

8. Procédé selon l'une des revendications 1 à 7, **caractérisé en ce que** la température de réaction du substrat (2) est mesurée et réglée en utilisant au moins un capteur, le capteur étant un pyromètre infrarouge, une caméra thermoscopique ou un capteur de chaleur.

9. Procédé selon l'une des revendications 1 à 8, **caractérisé en ce que** la couche intermédiaire céramique (4) est réalisée avec une épaisseur de 0,1 à 0,6 µm.

10. Procédé selon l'une des revendications 1 à 9, **caractérisé en ce que**, pour former la couche intermédiaire céramique (4), une valeur de 0,05 à 5 mbar est réglée pour la pression partielle d'oxygène et contrôlée pendant le processus entier.

11. Procédé selon l'une des revendications 1 à 10, **caractérisé en ce que**, pour former de manière définie la structure stratifiée en appliquant la couche colonnaire, une pression partielle appropriée d'oxygène est réglée entre 0,05 et 2 mbar, de préférence entre 0,05 et 1 mbar, et contrôlée pendant le processus entier.

12. Procédé selon la revendication 11, **caractérisé en ce que** la pression de travail dans la chambre de processus (6) est entre 0,01 et 20 mbar, de préférence entre 0,05 et 5 mbar.
